# EUROPEAN PATENT SPECIFICATION

(11) **EP 3 686 846 B1**
(45) Date of publication and mention of the grant of the patent: **02.08.2023**
(21) Application number: 20150531.0
(22) Date of filing: 14.03.2014
(51) Int. Cl.: G06T 7/73, G01N 1/04, H01J 49/04

(54) **IMAGE RECOGNITION BASED ABLATION PATTERN POSITION RECALL**
BILDERKENNUNGSBASIERTER POSITIONSNEUAUFRUF EINES ABLATIONSMUSTERS
RAPPEL DE POSITION DE MOTIF D'ABLATION BASÉ SUR LA RECONNAISSANCE D'IMAGE

(30) Priority: 15.03.2013 US 201361792016 P
(43) Date of publication of application: 29.07.2020
(62) Divisional of application: 14762234.4
(73) Proprietor: Elemental Scientific Lasers, LLC, Omaha, NE 68127 (US)
(72) Inventor: SUMMERFIELD, Leif Christian, Bozeman, MT 59718 (US)
(74) Representative: HGF

(56) References cited:
- US-A1- 2009 273 782
- US-A1- 2011 198 496
- BARRETT S F ET AL: "DIGITAL TRACKING AND CONTROL OF RETINAL IMAGES", OPTICAL ENGINEERING, SOC. OF PHOTO-OPTICAL INSTRUMENTATION ENGINEERS, BELLINGHAM, vol. 33, no. 1, 1 January 1994 (1994-01-01), pages 150-159, XP000421276, ISSN: 0091-3286, DOI: 10.1117/12.149134
- DOIGNON C ET AL: "Autonomous 3-d positioning of surgical instruments in robotized laparoscopic surgery using visual servoing", IEEE TRANSACTIONS ON ROBOTICS AND AUTOMATION, IEEE INC, NEW YORK, US, vol. 19, no. 5, 1 October 2003 (2003-10-01), pages 842-853, XP011102058, ISSN: 1042-296X, DOI: 10.1109/TRA.2003.817086

## Description

### Background of the Invention

Analysis systems, such as mass spectrometry (MS) systems, optical emission spectrometry (OES) systems and the like, can be used to analyze the composition of a target material, for example a solid crystal. Often, a sample of the target is provided to analysis systems of this type in the form of an aerosol. The aerosol is typically produced by arranging the target material in a sample chamber, introducing a flow of a carrier gas within the sample chamber, and ejecting a portion of the target in the form of particles. The ejecting may be done for example by laser ablating a portion of the target with one or more laser pulses, from a laser, to generate a plume containing particles and/or vapor ejected or otherwise generated from the target suspended within the carrier gas. Thereafter, the ejected particles are typically entrained by the flowing carrier gas and transported to an analysis system via a sample transport conduit. These analysis systems perform applications including Laser ablation Inductively Coupled Plasma Mass Spectrometry (LA-ICP-MS) and Laser ablation Inductively Coupled Plasma Optical Emission Spectrometry (LA-ICP-OES). Examples of a laser ablation system is known from US2009273782. It is known from US2011/198496 to provide a mass spectrometer including an apparatus with a removeable sample plate and displacement detection means, and a displacement correction means..

Analytical laser ablation applications require repeated movement of an XY, or XYZ, positioning system during experimental runs performed subsequently to a scan placement process in which movements to be repeated during the experimental run are set. One exemplary use of analytical laser ablation systems is for zircon crystal grain dating. Zircon crystals incorporate uranium and thorium atoms into the crystalline structure, and strongly reject lead during the formation of the crystal. Therefore, any lead present in a zircon crystal is assumed to be from radioactive decay. Therefore, if the composition of a zircon crystal is determined the age of the crystal can be determined by calculating the amount of time it would take to produce the ratio of uranium to lead in the crystal through radioactive decay.

Zircon crystal grains used for dating frequently have very small dimensions, for example a single grain may range in size from 20um across to 200um across points in an outline of the crystal grain. Within the crystals invisible structures may exist that can be imaged using an SEM, XRF or other similar tool. These invisible structures may cause areas of a crystal grain to be not ideal for certain analytical laser ablation applications. For these reasons a desired target on a zircon crystal grain for zircon crystal dating, and similar applications, may be a very small and thus these applications require very high precision for ablating a surface of a crystal grain, and therefore require high precision stage movement.

During a typical zircon crystal grain aging application an exemplary sample slide may be prepared containing approximately 20-200+ grains in an approximately 50mm by 50mm area. The grains may be placed on the slide automatically or by a user. The grains may be placed in a random arrangement or in an orderly pattern, such as in rows and columns. Further, the grains may be placed according to sets of crystal grains to be analyzed together. After placement the grains may be machined to have flat surfaces substantially on the same plane as the other grains on the sample slide.

After the sample slide is prepared it is loaded into a sample chamber of an analytical laser ablation device and a scan placement process is performed. An operator places a pattern scan, also referred to as an overlay, on the sample slide. This may be done with using software to perform a virtual overlay of pattern shapes. During this process the locations of a series of scans or holes to be fired upon by the laser are set in precise positions, for example at specific locations on the machined faces of individual crystal grains. These set positions are referred to as intended laser locations. Once the scan placement process is complete an experimental run occurs where a motion control system executes a series of movements determined by the scan placement process to ablate each crystal grain at the intended laser locations at a desired time and sequence.

As part of the experimental setup a reference material blank is usually placed in the sample chamber of a laser ablation apparatus, such as off to one side of the main experiment area. The reference blank has a known composition. The system may be set to analyze sets of zircon crystals grains and between sets of zircon crystal grains the system will then be programmed to sample the reference blank material. In this way, analytical drifts measured at an ICP-MS for example can be corrected for given the reference's known and repeatable concentrations of material.

During the scan placement process a list of intended laser locations are saved as XY, or XYZ, stage coordinates. During the experimental run, for each intended laser location the sample is moved relative to the laser by the motion control system according to the saved coordinate position.

During an experimental run a motion control system will move the sample slide relative to the laser for each incrementally setup intended laser location on a zircon crystal grain in a set in the sample and then to the reference blank, then back to the next set of crystal grains. With each large movement either between crystal grains with intended laser locations, or to the reference blank a bi-directional repeatability error may appear to shift the sample slide relative to the laser beam's position. A large 30mm move can incur a built up bi-directional repeatabilty or accuracy error that will shift the laser focus position off of the intented laser position on a crystal grain. The precision with which the ablation pattern was placed relative to the sample will be reduced by the time the laser is to be fired if a repeatability error accumulates. In some cases the laser will fire in an unintended location, including missing the crystal grain with an intended laser location thereon altogether. This is undesirable since a laser firing at an unintended location will skew or ruin the data for that experiment pass.

Due to the large number of zircon crystals often sampled during the same experimental run, such as 20 to 200+crystal grains, it is undesirably time consuming for an operator to monitor the equipment and correct for poor system level accuracy of the laser beam on the sample during the experimental run.

Conventional techniques for XYZ positioning systems include motion control topologies, such as open loop and closed loop. Open loop designs may be stepper motor based, and move the stage via linear type motors or lead-screw drive type mechanisms a precise amount , for example a fraction of the actual full step range. Each step can be on the order of 1-2um of XY movement, with microstepping adding a divide by 2,4,8,16 or 32 microsteps per full step. In this way it is possible to attempt positioning at a very high resolution, only limited by the mechanical coupling of the stage mechanism. Closed loop adds to this a feedback mechanism and a controller topology that attempts to reduce requested position-actual position error until the error is zero or very small. These solutions have the disadvantage of requiring costlier stages and controllers and are complicated to implement.

### Brief Summary of the invention

According to an aspect of the invention, there is provided a laser ablation system comprising a laser, a camera positioned relative to the laser, a sample chamber providing a support surface for carrying a sample, a motion control system configured to position the laser on the sample on the support surface during a laser ablation procedure, and means for software-based image recognition. The laser ablation system is configured to set an ablation pattern including multiple intended laser locations for a sample during a scan placement process, during which for each of the multiple intended laser locations, the laser ablation system is configured to position the sample relative to an intended laser location of said multiple intended laser locations on the sample with the motion control system, save position coordinates for the intended laser location, save an image taken with the camera for the intended laser location, and initiate an experiment during which for each of the multiple intended laser locations, the laser ablation system is configured to position the laser location relative to the sample to a current position based on the saved coordinates of a chosen one of the multiple intended laser locations with a saved image, and compare a current image of the current position taken with a camera with the saved image for the chosen intended laser location; and determine a position error based on the comparison, wherein, if the position error is not within a window of acceptability, the laser ablation system is configured to apply an offset movement of the laser location relative to the sample with the motion control system based on the position error to correct for the position error and repeat the comparing and determining steps, and, if the position error is within the window of acceptability, the laser ablation system is configured to fire a laser beam upon the laser location.

The laser ablation system may be an open-loop system, and wherein, in the positioning of the laser location relative to the sample to a current position, the current position may be an open-loop assumed correct position.

The camera may be fixed relative to the laser location.

The ability to position the laser location relative to the sample to a current position may be set to occur after sampling a reference blank.

The ability to save the image for each of said multiple intended laser locations may further include the ability to save at least one of lighting levels, zoom levels, or camera properties used when capturing the image.

The system may further comprise an inlet conduit configured to provide a flow of a carrier gas over the sample, wherein said laser beam is configured to cause material of the sample to be suspended in the carrier gas.

### Brief Description of the drawings

Fig. 1 is a cross sectional view of a laser ablation apparatus.
Fig. 2 illustrates a sample slide containing zircon crystal grains.
Fig. 3 is a flow chart diagram.
Figs. 4a-c illustrate the field of view of a camera/microscope during the scan placement and experimental run steps.

### Detailed description of the invention

The following description of the invention will typically be with reference to specific structural embodiments and methods. It is to be understood that there is no intention to limit the invention to the specifically disclosed embodiments and methods but that the invention may be practiced using other features, elements, methods and embodiments. Preferred embodiments are described to illustrate the present invention, not to limit its scope, which is defined by the claims. Those of ordinary skill in the art will recognize a variety of equivalent variations on the description that follows. Like elements in various embodiments are commonly referred to with like reference numerals.

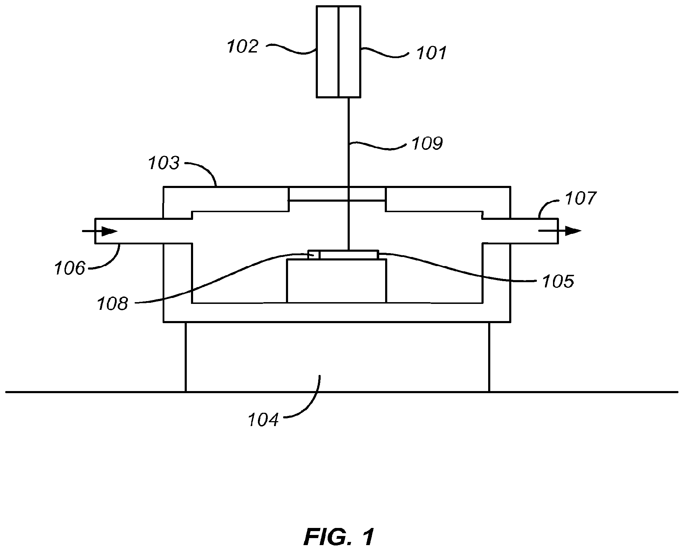

FIG. 1 illustrates a cross sectional view of a laser ablation apparatus **100.** Laser ablation apparatus **100** includes a laser **101,** a camera/microscope **102** fixed relative to the laser **101,** a sample chamber **103,** and a motion control system **104** which controls movements of the sample chamber **103** relative to the laser **101** and camera/microscope **102.** To begin analysis a sample slide **105** is placed within the sample chamber **103.** The sample chamber includes an inlet conduit **106** to allow in a flow of carrier gas and a sample transport conduit **107** to allow the exit of carrier gas. Within the sample chamber **103** is a reference blank **108** which may be separate or integral with the sample slide **105.**

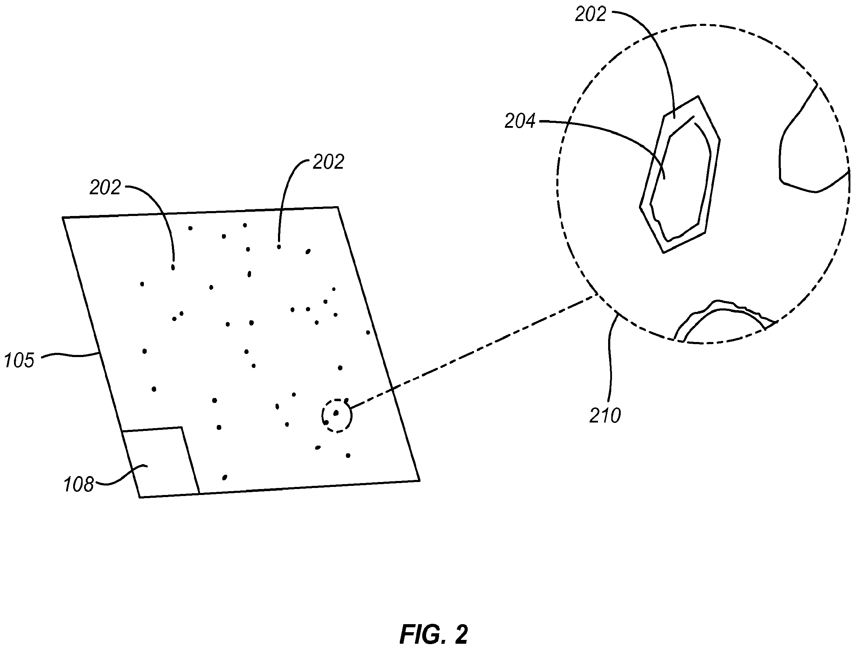

Fig. 2 illustrates a sample slide **105** and a zoomed in view **201** of a portion of the surface of the slide. On the surface of the sample slide **105** there is a plurality of zircon crystal grains **202.** In embodiments each crystal is machined to have a flat surface **204.**

Embodiments of the invention include software based image recognition to correct errors that tend to shift the sample relative to the laser beams during an experimental run. In embodiments, this is done by precisely moving a stage of a motion control system to the intended laser location of an ablation pattern set during a scan placement process. This precise movement is accomplished by comparing images saved during the scan placement process as kernel image with current position images of the camera/microscope field of view and calculating corrective moves.

In embodiments the xyz position in combination with a kernel image will ensure the laser fires precisely at the intended laser locations that were set during the scan placement process by correcting for any movement error incurred when returning to an intended laser position that was set during the scan placement process. In embodiments movement error is less than half the field of view of the camera/microscope , for example 350um, ensuring that the intended laser location is close enough to appear in the field of view of the camera/microscope view during the experimental run. This current camera/microscope view is then used to compare against the saved kernel image location, and an XY, or XYZ, offset move can be applied to correct for the error.

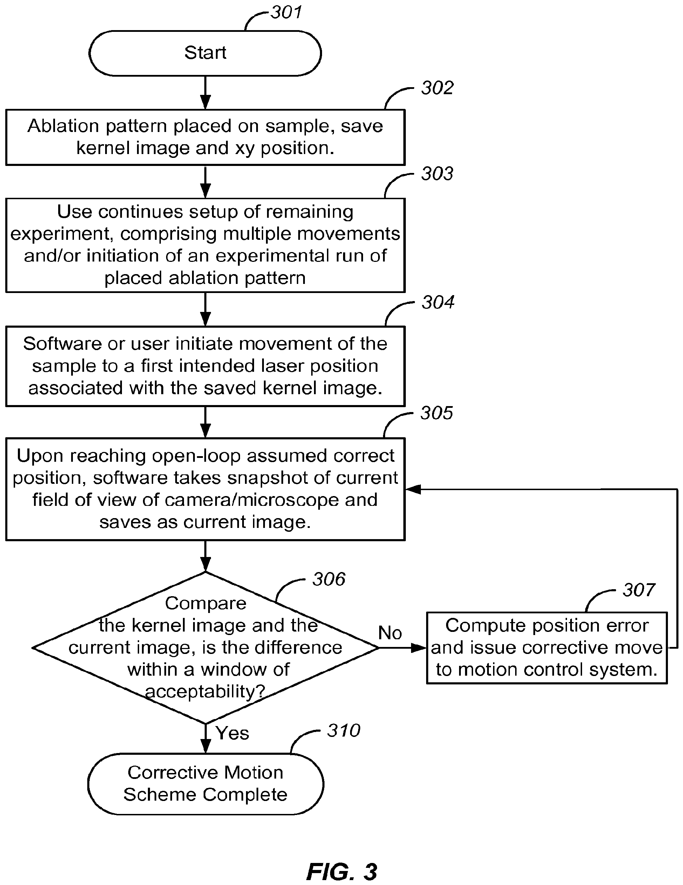

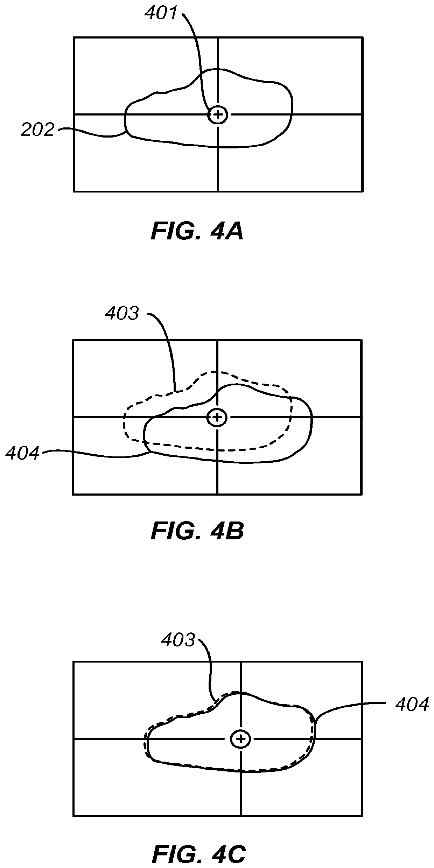

Fig. 3 is a flow chart diagram of an embodiment. In the embodiment, the process begins 301 and an ablation pattern is placed onto a sample in a first step 302, for example using software to perform a virtual overlay of pattern shapes. The virtual overlay software using the field of view of the camera/microscope **102** allows a user to view a portion of the sample slide containing a crystal grain **202** and set an intended laser position for a location on a crystal grain. The virtual overlay software further allows a user to set the intended laser positions on a plurality of crystal grains **202** on the sample slide **105** forming an ablation pattern. An embodiment of setting an intended laser location on a crystal grain is illustrated in Fig. 4A showing a field of view of the camera/microscope **102** with crosshairs and a spot representing an intended laser location **401** for a laser to be fired onto a zircon crystal grain **202** located in the field of view. During this step of placing the ablation pattern information about the ablation pattern is saved. In embodiments this information includes XY, or XYZ, positions. In embodiments firing information and movement properties are saved. In embodiments an image of a camera/microscope field of view at the time the intended laser position of the ablation pattern was placed or moved, is saved as the "kernel" image to be used to position the laser to the intended laser positions during an experimental run. In embodiments further saved information includes lighting levels, zoom level and/or camera properties used when capturing the image, which will ensure that video conditions can be fully reproduced during a re-centering step.

In embodiments, after a kernel imaged is saved a user continues setup of the remaining experiment **303,** comprising multiple movements and/or initiation of an experimental scan of the placed pattern(s). Once the experimental run is initiated the next step **304** is for software or a user to initiate movement of the sample to a first intended laser position. Upon reaching the open -loop assumed correct position of the intended laser position a snapshot of the field of view of the camera/microscope is taken **305** corresponding to the current position of the sample relative to the camera. An embodiment of this step is illustrated in Fig. 4b showing the kernel image **403,** represented by a dotted outline of crystal grain, corresponding to the intended laser position and a current image **404** of the current field of view of the camera/microscope. As is shown in Fig. 4b the kernel image **403** is not aligned with the current image **404,** represented by a full line outline of the same crystal grain present in the kernel image **403,** due to some positioning repeatability error.

During a comparing step **306** the difference of the intended laser location and the current laser location is determined by comparing the kernel image and the current image of the current field of view of the camera/microscope. If the different is determined to be within a window of acceptability, the correct motion scheme is complete **310 ;** if the different is determined to not be within a window of acceptability, a computing step **307** is executed wherein a position error is computed and a set of corrective moves are issued to and executed by the motion control system **104** which moves the sample relative to the camera/microscope and laser. In embodiments this step is done with image recognition algorithms to calculate the difference between the kernel image and the current image of the current field of view of the camera/microscope. In embodiments the window of acceptability may be predefined, computed by software, or set by an operator. In embodiments the corrective move can be a series of moves until the position error is within a window of acceptability.

Once the stage is repositioned due to corrective moves the step of taking a snapshot of the current position **305** is repeated as is the comparing step **306** in which the difference between the original position from the kernel image and a new current position are compared.

Any time in the process when during the comparing step **306** the difference between the kernel image **403** and the current image **404**of the current field of view of the camera/microscope is within the window of acceptability, as is illustrated in Fig. 4c, the corrective motion scheme is complete **310** and the laser is fired at the intended laser position on the crystal grain. This causes a sample of the crystal grain to be suspending in a carrier gas and analyzed in a spectrometry instrument allowing the composition of the crystal grain to be determined for such application as zircon crystal grain dating.

The primary advantage of this invention is to apply a corrective motion scheme to allow for extremely high precision of laser placement greatly improving the specifications of the same open-loop XYZ stage control and motion system, without adding any system level hardware additions/costs.

In embodiments during which an experiment is run, XY motion control system 104 will move the sample slide **105** relative to the camera/microscope **102** and laser **101**to each incrementally setup intended laser location **401** on a zircon crystal grain **202** in a set of zircon crystal grains, then to the reference blank **108,** then back to the next set of zircon crystal grains. In some examples a set of zircon crystal grains could include only 1 grain while in others a set could include 2 or more grains. With each movement either between intended targets on a zircon crystal grains or to the reference blank a bi-directional repeatability error may appear to shift the sample relative to the laser beam **109**position. To correct this bi-directional repeatability error, the corrective motion scheme disclosed above is used to ensure that the laser fires at the intended laser position set during the scan placement process.

While the invention has been described by way of example and in terms of the specific embodiments, it is to be understood that the invention is not limited to the disclosed embodiments. To the contrary, it is intended to cover various modifications and similar arrangements as would be apparent to those skilled in the art. Therefore, the scope of the appended claims should be accorded the broadest interpretation so as to encompass all such modifications and similar arrangements.

## Claims

1. A laser ablation system (100) comprising:
a laser (101);
a camera (102) positioned relative to the laser (101);
a sample chamber (103) providing a support surface (105) for carrying a sample;
a motion control system (104) configured to position the laser (101) on the sample on the support surface (105) during a laser ablation procedure, and
means for software-based image recognition
wherein the laser ablation system is configured to:
set an ablation pattern including multiple intended laser locations for a sample during a scan placement process during which, for each of the multiple intended laser locations, the laser ablation system is configured to:
position the sample relative to an intended laser location of said multiple intended laser locations on the sample with the motion control system (104);
save position coordinates for the intended laser location;
save an image (403) taken with the camera (102) for the intended laser location; and
initiate an experiment during which for each of the multiple intended laser locations, the laser ablation system is configured to:
position the laser location relative to the sample to a current position based on the saved coordinates of a chosen one of the multiple intended laser locations with a saved image;
compare a current image (404) of the current position taken with a camera with the saved image (403) for the chosen intended laser location; and
determine a position error based on the comparison;
wherein, if the position error is not within a window of acceptability, the laser ablation system is configured to apply an offset movement of the laser location relative to the sample with the motion control system (104) based on the position error to correct for the position error and repeat the comparing and determining steps, and, if the position error is within the window of acceptability, the laser ablation system is configured to fire a laser beam (109) upon the laser location.

2. The system of claim 1, wherein the laser ablation system (100) is an open-loop system; and wherein, in the positioning of the laser location relative to the sample to a current position, the current position is an open-loop assumed correct position.

3. The system of claim 1, wherein the camera (102) is fixed relative to the laser (101) location.

4. The system of claim 1, wherein the ability to position the laser (101) location relative to the sample to a current position is set to occur after sampling a reference blank (108).

5. The system of claim 1, wherein the ability to save the image (403) for each of said multiple intended laser (101) locations further includes the ability to save at least one of lighting levels, zoom levels, or camera properties used when capturing the image (403).

6. The system of claim 1, further comprising an inlet conduit (106) configured to provide a flow of a carrier gas over the sample, wherein said laser beam (109) is configured to cause material of the sample to be suspended in the carrier gas.

## Patentansprüche

1. Laserablationssystem (100), umfassend:
einen Laser (101);
eine Kamera (102), die in Bezug auf den Laser (101) positioniert ist;
eine Probenkammer (103), die eine Auflagefläche (105) zum Tragen einer Probe bereitstellt;
ein Bewegungssteuerungssystem (104), das konfiguriert ist, um den Laser (101) während eines Laserablationsvorgangs auf der Probe auf der Auflagefläche (105) zu positionieren, und
Einrichtungen zur softwarebasierten Bilderkennung, wobei das Laserablationssystem zu Folgendem konfiguriert ist:
Einstellen eines Ablationsmusters, das mehrere beabsichtigte Laserstellen für eine Probe während eines Scan-Platzierungsvorgangs beinhaltet, bei dem das Laserablationssystem für jede der mehreren beabsichtigten Laserstellen zu Folgendem konfiguriert ist:
Positionieren der Probe in Bezug auf eine beabsichtigte Laserstelle der mehreren beabsichtigten Laserstellen auf der Probe mit dem Bewegungssteuerungssystem (104);
Speichern von Positionskoordinaten für die beabsichtigte Laserstelle;
Speichern eines mit der Kamera (102) aufgenommenen Bilds (403) für die beabsichtigte Laserstelle; und
Einleiten eines Experiments, bei dem das Laserablationssystem für jede der mehreren beabsichtigten Laserstellen zu Folgendem konfiguriert ist:
Positionieren der Laserstelle in Bezug auf die Probe zu einer aktuellen Position basierend auf den gespeicherten Koordinaten einer ausgewählten der mehreren beabsichtigten Laserstellen mit einem gespeicherten Bild;
Vergleichen eines aktuellen Bilds (404) der aktuellen Position, das mit einer Kamera aufgenommen wird, mit dem gespeicherten Bild (403) für die gewählte beabsichtigte Laserstelle; und
Bestimmen eines Positionsfehlers basierend auf dem Vergleich;
wobei, wenn der Positionsfehler nicht innerhalb eines Akzeptanzfensters ist, das Laserablationssystem konfiguriert ist, um eine Offset-Bewegung der Laserstelle in Bezug auf die Probe mit dem Bewegungssteuerungssystem (104) basierend auf dem Positionsfehler anzuwenden, um den Positionsfehler zu korrigieren, und Wiederholen des Vergleichs- und Bestimmungsschritts, und wobei, wenn der Positionsfehler innerhalb des Akzeptanzfensters ist, das Laserablationssystem konfiguriert ist, um einen Laserstrahl (109) auf die Laserstelle abzugeben.

2. System nach Anspruch 1, wobei das Laserablationssystem (100) ein System mit offenem Regelkreis ist; und
wobei beim Positionieren der Laserstelle in Bezug auf die Probe zu einer aktuellen Position die aktuelle Position eine im offenen Regelkreis angenommene korrekte Position ist.

3. System nach Anspruch 1, wobei die Kamera (102) in Bezug auf die Stelle des Lasers (101) fixiert ist.

4. System nach Anspruch 1, wobei die Fähigkeit, die Position des Lasers (101) in Bezug auf die Probe auf eine aktuelle Position zu positionieren, eingestellt ist, um nach einer Probenahme eines Referenzrohlings (108) zu erfolgen.

5. System nach Anspruch 1, wobei die Fähigkeit, das Bild (403) für jede der mehreren beabsichtigten Laserstellen (101) zu speichern, ferner die Fähigkeit beinhaltet, mindestens eines von Beleuchtungsniveaus, Zoomniveaus oder Kameraeigenschaften zu speichern, die beim Aufnehmen des Bilds (403) verwendet werden.

6. System nach Anspruch 1, ferner umfassend eine Einlassleitung (106), die konfiguriert ist, um einen Strom eines Trägergases über die Probe bereitzustellen, wobei der Laserstrahl (109) konfiguriert ist, um zu bewirken, dass Material der Probe in dem Trägergas suspendiert wird.

## Revendications

1. Système d'ablation par laser (100) comprenant :
un laser (101) ;
une caméra (102) positionnée par rapport au laser (101) ;
une chambre d'échantillonnage (103) fournissant une surface support (105) permettant de supporter un échantillon ;
un système de commande de mouvement (104) conçu pour positionner le laser (101) sur l'échantillon sur la surface support (105) pendant une procédure d'ablation par laser, et
un moyen permettant la reconnaissance d'image basée sur logiciel,
ledit système d'ablation par laser étant conçu pour :
définir un schéma d'ablation comprenant de multiples emplacements de laser prévus pour un échantillon pendant un processus de placement par balayage au cours duquel, pour chacun des multiples emplacements de laser prévus, le système d'ablation par laser étant conçu pour :
positionner l'échantillon par rapport à un emplacement de laser prévu parmi lesdits multiples emplacements de laser prévus sur l'échantillon avec le système de commande de mouvement (104) ;
enregistrer les coordonnées de position pour l'emplacement de laser prévu ;
enregistrer une image (403) prise avec la caméra (102) pour l'emplacement de laser prévu ; et
initier une expérimentation au cours de laquelle, pour chacun des multiples emplacements de laser prévus, le système d'ablation par laser est conçu pour :
positionner l'emplacement de laser par rapport à l'échantillon en une position courante en fonction des coordonnées enregistrées d'un emplacement choisi parmi les multiples emplacements de laser prévus avec une image enregistrée ;
comparer une image courante (404) de la position courante prise avec une caméra à l'image enregistrée (403) pour l'emplacement de laser prévu choisi ; et
déterminer une erreur de position sur la base de la comparaison ;
si l'erreur de position ne se trouve pas dans une fenêtre d'acceptabilité, ledit système d'ablation par laser étant conçu pour appliquer un déplacement de décalage de l'emplacement de laser par rapport à l'échantillon avec le système de commande de mouvement (104) en fonction de l'erreur de position pour corriger l'erreur de position et répéter les étapes de comparaison et de détermination, et, si l'erreur de position se trouve dans la fenêtre d'acceptabilité, ledit système d'ablation par laser étant conçu pour émettre un faisceau laser (109) sur l'emplacement de laser.

2. Système selon la revendication 1, ledit système d'ablation par laser (100) étant un système en boucle ouverte ; et
dans le positionnement de l'emplacement de laser par rapport à l'échantillon en une position actuelle, ladite position actuelle étant une position correcte supposée en boucle ouverte.

3. Système selon la revendication 1, ladite caméra (102) étant fixe par rapport à l'emplacement du laser (101).

4. Système selon la revendication 1, la capacité à positionner l'emplacement du laser (101) par rapport à l'échantillon en une position courante étant réglée pour se produire après l'échantillonnage d'un témoin de référence (108).

5. Système selon la revendication 1, la capacité à enregistrer l'image (403) pour chacun desdits multiples emplacements du laser (101) prévus comprenant en outre la capacité à enregistrer au moins une caractéristique parmi les niveaux d'éclairage, les niveaux de zoom ou les propriétés de caméra utilisées lors de la capture de l'image (403).

6. Système selon la revendication 1, comprenant en outre un conduit d'entrée (106) conçu pour fournir un flux de gaz vecteur sur l'échantillon, ledit faisceau laser (109) étant conçu pour amener le matériau de l'échantillon à être mis en supension dans le gaz vecteur.
